# FASCICULE DE BREVET EUROPEEN

(11) **EP 2 075 556 B1**
(45) Date de publication et mention de la délivrance du brevet: **27.01.2010**
(21) Numéro de dépôt: 08291179.3
(22) Date de dépôt: 12.12.2008
(51) Int. Cl.: G01J 11/00

(54) **Procédé et dispositif pour la mesure de la phase spectrale ou de phase spectrale et spatiale combinées d'impulsions lumineuses ultra brèves**
Verfahren und Vorrichtung zum Messen der Spektralphase oder der Kombination aus Spektralphase und räumlicher Phase von ultrakurzen Lichtimpulsen
Method and device for measuring the spectral phase or the combined spectral and spatial phase of ultra-brief light pulses

(30) Priorité: 26.12.2007 FR 0709092
(43) Date de publication de la demande: 01.07.2009
(73) Titulaire: Fastlite, 75013 Paris (FR)
(72) Inventeur: Kaplan, Daniel, 75006 Paris (FR); Oksenhendler, Thomas, 91940 Gometz le Chatel (FR); Forget, Nicolas, 91400 Orsay (FR)
(74) Mandataire: de Saint-Palais, Arnaud Marie

(56) Documents cités:
- US-A- 6 108 085
- DORRER C ET AL: "Characterization of the spectral phase of ultrashort light pulses" COMPTES RENDUS DE L'ACADEMIE DES SCIENCES, SERIE IV (PHYSIQUE, ASTROPHYSIQUE) EDITIONS ELSEVIER FRANCE, vol. 2, no. 10, décembre 2001 (2001-12), pages 1415-1426, XP002489017 ISSN: 1296-2147

## Description

La présente invention concerne un procédé et un dispositif pour la mesure de la phase spectrale ou de phases spectrale et spatiale combinées d'impulsions lumineuses ultra brèves.

Elle concerne principalement les mesures de phase spectrale c'est-à-dire les variations de la phase en fonction de la fréquence dans le spectre de ces impulsions. Secondairement, elle traite de la mesure concomitante de la phase spatiale, c'est-à-dire des variations de phase en fonction de la position dans un plan perpendiculaire à la direction de propagation. En effet, des mesures simultanées de phase spectrale et spatiale, dites mesures spatio-temporelles, sont importantes pour caractériser les sources d'impulsions ultra brèves et les dispositifs associés tels que compresseurs et extenseurs temporels.

D'une façon générale, on sait que la mesure de l'amplitude et de la phase des impulsions lumineuses ultra brèves de durée comprise entre quelques femtosecondes et quelques picosecondes, présente de nombreuses difficultés.

Diverses méthodes de mesure de l'état de l'art sont décrites dans les documents suivants :
- I.A. Walmsley and R.Trebino: "Measuring fast pulses with slow detectors", Optics and Photonics News, March 1996, vol.7, No.3, p.23 ci-après désigné (WT),
- US 6 108 085,
- C.Dorrer and M. Joffre : "Characterization of the spectral phase of ultrashort light pulses", C.R.Acad.Sc.Paris, t.2, série IV, p.1415-1426, 2001 ci-après désigné (DJ).

Lorsque l'on dispose d'une impulsion référence de phase connue, une méthode simple décrite dans le document (DJ) pour mesurer la phase spectrale consiste à superposer cette impulsion référence à l'impulsion à mesurer décalée temporellement. Le spectre d'une telle impulsion présente des oscillations d'amplitude dont on peut déduire pour chaque longueur d'onde la différence de phase entre l'impulsion à mesurer et l'impulsion de référence. Cette méthode sera dénommée interférométrie spectrale simple (ISS). Elle n'utilise que des interactions optiques linéaires. Elle peut être appliquée conjointement à la phase spectrale et à la phase spatiale.

Dans le cas général, cependant, on ne dispose pas d'une telle impulsion de référence et l'état de l'art comprend des méthodes diverses dites auto-référencées. Il est nécessaire pour toutes ces méthodes d'utiliser au moins un élément optique à réponse non linéaire. Ceci est rappelé notamment dans le document (DJ).

Parmi les méthodes auto-référencées, on peut citer la méthode FROG (Frequency Resolved Optical Gating) et la méthode SPIDER (Spectral Phase Interferometry for Direct Electric Field Reconstruction). Ces deux méthodes étant décrites respectivement dans les documents suivants :
- R.Trebino and D.J.Kane : "Using phase retrieval to measure the intensity and phase of ultrashort pulses: Frequency Resolved Optical Gating", J.Opt.Soc.Am.A11, p.2429-2437, 1993, pour ce qui concerne la méthode FROG,
- C.Iaconis and I.A. Walmsley : "Spectral Phase Interferometry for Direct Electric field Reconstruction of ultrashort optical pulses", Opt.Lett, 23, p.729-794,1998, pour ce qui concerne la méthode SPIDER.

Dans tous les cas, plusieurs répliques de l'impulsion initiale, modifiées spectralement ou non, sont mélangées de façon non linéaire pour obtenir le signal utile. Les méthodes diffèrent selon qu'elles nécessitent une seule mesure (mesure mono-coup) ou plusieurs mesures correspondant à des impulsions lumineuses successives. Dans ce dernier cas, il est nécessaire que ces impulsions successives soient essentiellement identiques. Les méthodes diffèrent également selon que la phase peut être dérivée de la mesure par un algorithme direct, comme c'est le cas pour l'(ISS), où qu'elles font appel à une procédure d'ajustement successifs visant à minimiser la différence entre un calcul de la mesure attendue pour une phase spectrale d'essai et la mesure elle-même. La méthode FROG, par exemple, fait appel à une technique d'ajustements successifs, alors que la méthode SPIDER permet l'utilisation d'un algorithme direct. L'algorithme direct est en général considéré comme préférable étant donné les éventuelles incertitudes sur la convergence des ajustements successifs.

Par ailleurs, les méthodes diffèrent quant à leur capacité à effectuer une mesure spatio-temporelle telle que discutée plus haut. La méthode FROG ne permet pas cette mesure combinée sans ambiguïtés entre temporel et spatial. Une configuration de mesure spatio-temporelle, à partir d'une méthode SPIDER mono-coup, a été réalisée au prix d'une complexité fortement accrue du montage optique et au détriment de la sensibilité de l'instrument. Elle est décrite dans le document suivant :
C.Dorrer, E.M.Kosik, I.A. Walmsley: « Spatio-temporal characterization of the electric filed of ultrashort optical pulses using two-dimensionnal shearing interferometry", App.Phys.B, 74, p.209-217, 2002.

Il faut noter que dans le brevet Français 02 05872 « Procédé et dispositif pour la mesure de la phase et de l'amplitude des impulsions lumineuses ultra brèves », il a été proposé de réaliser diverses méthodes autoréférencées de l'état de l'art dans un seul instrument comprenant un façonneur d'impulsion, un élément non linéaire et un élément détecteur. Le façonneur d'impulsion est un dispositif permettant d'appliquer un filtre linéaire programmable à une impulsion, c'est-à-dire de modifier de manière contrôlée la phase et l'amplitude spectrale de cette impulsion. Parmi les dispositifs façonneurs d'impulsion de l'état de l'art, on distingue ceux qui sont basés sur une configuration de ligne « 4f » à dispersion nulle, tels que décrite dans la publication D.E. Leaird, and A.M. Weiner, "Femtosecond direct space-to-time pulse shaping," IEEE Journal of Quantum Electronics, vol. 37, pp. 494-504, (2001) et ceux fondés sur un filtre acousto-optique dispersif programmable (AOPDF) tel que décrit dans le brevet Français 96 08510. « Dispositif de contrôle d'impulsions lumineuses par un dispositif programmable acousto-optique ».

L'invention a plus particulièrement pour but de supprimer les inconvénients des méthodes précédemment cités, en exploitant les avantages de base de la méthode (ISS), qui sont entre autres la simplicité, la sensibilité, la mesure mono-coup, l'obtention de la phase par un algorithme direct et la possibilité de mesures combinées spatio-temporelles. Le principe consiste à obtenir une impulsion de référence de phase connue, ou déductible de la mesure, par une interaction de l'impulsion à mesurer avec un milieu non-linéaire.

Ainsi, le procédé selon l'invention pourra comprendre les étapes suivantes :
- une première étape permettant une décomposition (S) de ladite impulsion lumineuse ultra brève (Ii) en deux impulsions, dénommées respectivement impulsion signal (Is) et impulsion de référence primaire (Irp), de polarisation ou de direction de propagation différentes et dont les caractéristiques de phase sont essentiellement identiques à ladite impulsion lumineuse ultra brève (Ii),
- une deuxième étape permettant une interaction de ladite impulsion de référence primaire (Irp) avec un matériau optique non linéaire (DMNL), ladite interaction générant, par un mécanisme optique non linéaire d'ordre n impair supérieur ou égal à 3, une impulsion de référence secondaire (Irs) de fréquence moyenne essentiellement identique à celle de l'impulsion de référence primaire (Irp), d'intensité proportionnelle à l'intensité de ladite impulsion de référence primaire (Irp) portée à la puissance n, dans des conditions où la largeur spectrale de ladite impulsion de référence secondaire (Irs) est supérieure à la largeur spectrale de ladite impulsion de référence primaire (Irp),
- une troisième étape permettant une mesure d'interférométrie (SPEC) spectrale et/ou spatiale par recombinaison (R) de ladite impulsion de référence secondaire (Irs) et de ladite impulsion signal (Is), avec un décalage temporel donné ou nul et un décalage angulaire donné ou nul.

Eventuellement ce procédé pourra en outre comprendre l'extraction de l'impulsion lumineuse ultra brève et la caractérisation de cette impulsion grâce au résultat de la mesure de manière à obtenir une impulsion extraite de forme programmable et mesurée.

Ce principe sera mieux compris dans la description d'un mode de réalisation de l'invention qui va suivre.

Préalablement, seront abordées les raisons pour lesquelles une telle méthode diffère des méthodes existantes.

La méthode SPIDER est également une méthode interférométrique. Elle est dérivée d'une technique de mesure de la phase spatiale appelée interférométrie à décalage. Dans le cas de la méthode SPIDER, il s'agit d'un décalage spectral. L'interférence est réalisée entre deux impulsions identiques à un décalage de fréquence près, obtenues par interaction non linéaire de deux répliques de l'impulsion à mesurer avec deux ondes quasi monochromatiques différentes, de fréquences f1 et f2. Les ondes quasi monochromatiques sont obtenues par filtrage linéaire de l'impulsion à mesurer. La mesure interférométrique finale est donc réalisée sur une combinaison de deux impulsions toutes les deux modifiées par interaction non linéaire. Dans le cas de la présente invention, l'impulsion à mesurer n'est pas modifiée et c'est uniquement la référence qui est obtenue par interaction non linéaire. L'algorithme de la méthode SPIDER permet d'obtenir non la phase elle-même, mais la différence entre les phases des deux impulsions décalées en fréquence de la différence f2 - f1. La méthode donne donc une approximation de la dérivée de la phase en fonction de la fréquence. Un compromis concernant le choix des fréquences f2 et f1 doit être effectué car l'augmentation de la différence f2 - f1 augmente la sensibilité mais diminue la résolution spectrale de la mesure. Par ailleurs, le décalage temporel utilisé pour la technique d'interférométrie doit être déterminé avec précision car il influence la mesure de la dérivée seconde de la phase en fonction de la fréquence qui est une quantité pratiquement significative ; dans la méthode (ISS), utilisée dans la présente invention, une imprécision sur le décalage temporel, conduit à une erreur sur la dérivée de la phase qui n'est pas significative.

Les autres méthodes, telles que FROG, font appel également à une combinaison d'impulsions et à des interactions non-linéaires concernant l'ensemble de ces impulsions. Par ailleurs, dans ces méthodes l'interférométrie spectrale est soit absente, soit n'est pas la technique de base d'extraction de la phase.

Un mode de mise en oeuvre du procédé selon l'invention sera décrit ci-après, à titre d'exemple non limitatif, avec référence aux dessins annexés dans lesquels :
La figure 1 est une représentation schématique d'une première version de montage selon l' invention ;
Les figures 2a, 2b, 2c, représentent les variations de la bande relative en fonction d'une constante aₙ, pour n = 2, 3, 4 ;
Les figures 3a, 3b, 3c, représentent la phase initiale et la phase après interaction non linéaire, ainsi que le spectre du signal, pour n = 2, 3, 4 ;
La figure 4 est une représentation schématique d'une deuxième version de montage selon l'invention ;
La figure 5 une représentation schématique d'une troisième version de montage selon l'invention ;
La figure 6 est une représentation schématique des signaux en fonction du temps selon la troisième version de montage ; et
La figure 7 est une représentation schématique d'une quatrième version de montage selon l'invention.

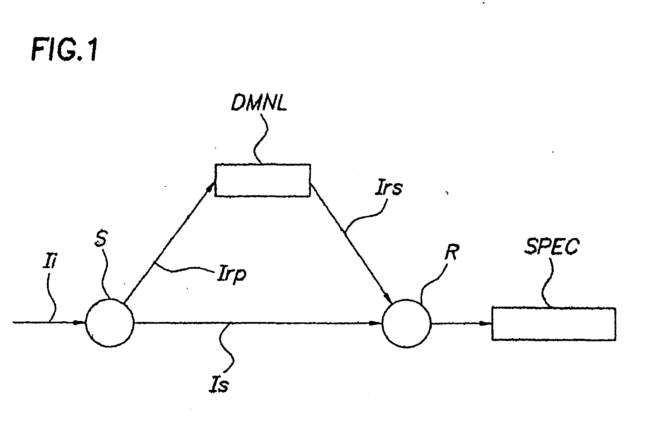

Dans l'exemple représenté sur la figure 1, est inclus un ou plusieurs dispositifs de séparation d'impulsions, désigné par S, qui, à partir d'une impulsion d'entrée, produisent deux impulsions de sortie. Il y a plusieurs dispositifs dans l'état de l'art réalisant cette fonction. Pour certains de ces dispositifs les polarisations des deux impulsions de sortie sont croisées. Le montage utilise également un ou plusieurs dispositifs de recombinaison d'impulsions, désigné par R, produisant à partir de deux impulsions d'entrée, une impulsion unique de sortie réalisant une sommation des deux impulsions d'entrée. Certaines techniques de réalisation des dispositifs de recombinaison, comprennent une sélection de polarisation des impulsions d'entrée.

Sur la représentation schématique de la figure 1, l'impulsion à mesurer incidente Ii est d'abord séparée en deux impulsions Is, Irp, de polarisations croisées, respectivement s et r, par un dispositif S. On désigne l'impulsion de polarisation r comme impulsion de référence primaire Irp, et l'impulsion de polarisation s comme impulsion signal Is. L'impulsion Irp est ensuite transférée à l'entrée d'un dispositif d'interaction avec un milieu non linéaire, DMNL, défini par une interaction prépondérante non linéaire du troisième ordre produisant une lumière colinéaire à polarisation perpendiculaire à la polarisation incidente. Ce type de mécanisme porte en français le nom de rotation de polarisation colinéaire et est désigné dans la littérature anglo-saxonne comme effet XPW (cross-polarized wave). Les effets d'interactions d'une impulsion ultracourte avec un matériau à effet XPW sont décrits dans la publication A. Jullien, 0. Albert, G. Cheriaux, J. Etchepare, S. Kourtev, N. Minkovski et S. M. Saltiel « Nonlinear polarization rotation of elliptical light in cubic crystals, with application to cross-polarized wave generation », Journal of Optical Society of America B 22, 2635 (2005). Les matériaux utilisables sont par exemple les fluorures de formule BaF2 et LiF. Le dispositif DMNL pourra comprendre outre le matériau non-linéaire lui-même, des composants optiques de focalisation de manière à ce que l'intensité lumineuse dans le matériau soit optimisée pour l'effet non linéaire. L'impulsion de référence secondaire Irs, sortant du dispositif DMNL, est de polarisation s. Elle est combinée avec l'impulsion signal Is, de polarisation s, par un dispositif de recombinaison adéquat R. Un dispositif de type spectromètre SPEC mesure l'intensité spectrale de l'impulsion de sortie du dispositif de recombinaison R. Les trajets optiques dans la voie signal S⇒R et la voie référence S⇒DMNL⇒R sont ajustés de manière à ce que les deux signaux mélangés Is, Irs, linéairement soient décalés temporellement de manière adéquate pour la mesure d'interférométrie spectrale. Si nécessaire, l'homme de l'art pourra rajouter une section introduisant un délai ajustable mécaniquement de manière à régler ce décalage temporel. De même, un dispositif d'atténuation de l'intensité lumineuse pourra éventuellement être rajouté sur la voie signal pour obtenir un rapport d'intensités adéquat entre les deux impulsions Is, Irs, recombinées, afin d'optimiser la mesure d'interférométrie spectrale. Ces adjonctions non essentielles à la compréhension du principe de fonctionnement n'ont pas été inclues dans le schéma de la figure 1. Bien entendu, plusieurs voies de mesure simultanées pourraient être mises en place en utilisant des combinaisons de plusieurs éléments S, R et SPEC.

Les caractéristiques de phase de l'impulsion en sortie du dispositif DMNL sont examinées ci-après. Supposant dans un premier temps, la phase de l'impulsion à mesurer constante, l'interaction du troisième ordre conduit à la superposition de contributions spectrales de triplets de fréquence. Si toutes les fréquences du spectre ont le même délai et contribuent également, il a été montré dans la publication précitée, que dans le cas d'un spectre de forme gaussienne la bande spectrale résultante est égale à la bande spectrale incidente multipliée par la racine de 3. De manière générale, pour des variations de phase suffisamment faibles, la bande spectrale sera augmentée. En effet, la fréquence de sortie correspond à des contributions de multiples triplets de fréquences ayant des délais proches. Dans ces conditions, un effet de moyenne réduit les variations de phase par rapport aux variations de la phase incidente. Cet effet est mis en évidence dans les calculs théoriques décrits ci-dessous.

### Simulations de la phase de l'impulsion de référence

Pour une impulsion incidente sur le milieu non linéaire défini par un champ complexe : E(ω), où ω=2πf est la pulsation optique et f la fréquence optique, on peut calculer la polarisation diélectrique non linéaire P₃ du matériau supposé mince, par : P₃(ωa)= ε₀ Σ χ₃(ω₁, ω₂, ω₃) E(ω₁) E(ω₂) E(ω₃), où ε₀ est la constante diélectrique du vide, χ₃ est la susceptibilité non linéaire d'ordre 3 et la sommation Σ opère sur tous les triplets (ω₁, ω₂, ω₃) tels que (ω=ω₁+ω₂+ω₃). Ce calcul opère sur l'ensemble des fréquences positives et négatives. Des fréquences proches de la fréquence d'entrée sont obtenues avec des triplets comprenant deux fréquences positives et une fréquence négative. Le champ complexe E₃(ω) en sortie du dispositif DMNL est déduit de cette polarisation par des calculs optiques conventionnels.

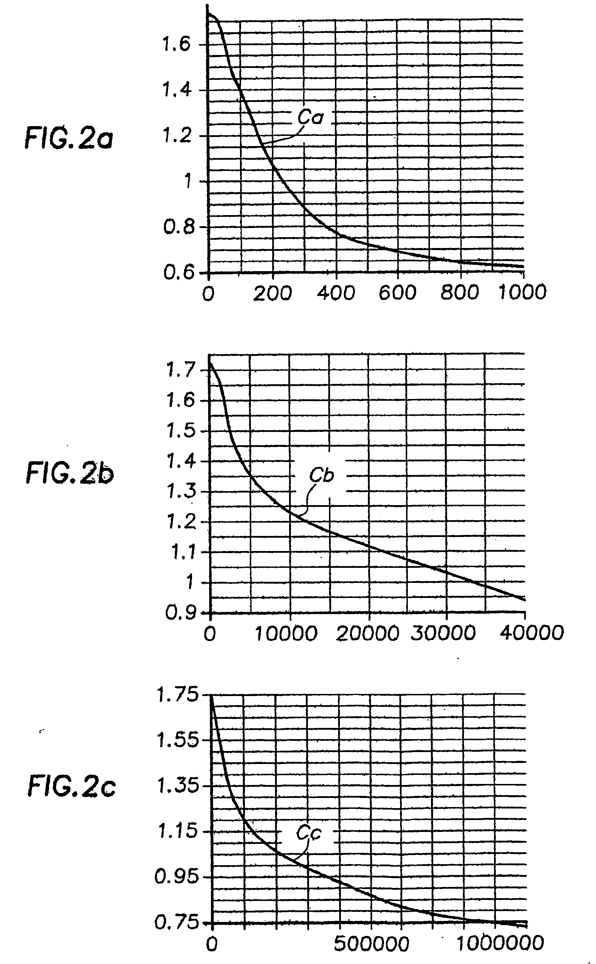

Supposant une forme gaussienne pour l'amplitude |E(ω)|, il est donc possible de calculer la phase ϕ₃(ω) et l'amplitude |E₃(ω)|. A titre d'exemple, il est utile d'examiner des dépendances en ω de la forme ϕ (ω) = aₙ (ω-ω₀)ⁿ où ω₀ est la pulsation optique centrale de la forme gaussienne de l'amplitude et aₙ une constante indépendante de ω On définit la largeur relative comme le rapport entre la largeur spectrale de |E₃(ω)| et la largeur spectrale de |E(ω)|, ces largeurs étant définies à mi-hauteur de l'intensité |E|². Les figures 2a, 2b, 2c, montrent les variations de cette largeur relative en fonction du coefficient aₙ, pour trois valeurs de n (n=2,3,4). Pour une valeur nulle du coefficient aₙ, la largeur normalisée vaut racine de trois, comme discuté plus haut. Lorsque l'on augmente aₙ, la largeur diminue car les variations de phase décalent les diverses fréquences temporellement, et elles ne peuvent plus se mélanger toutes indifféremment. Aux fortes valeurs de aₙ, l'effet d'augmentation de la largeur par mélange de fréquence n'est plus opérant et la largeur est au contraire réduite en raison de la dépendance cubique de l'intensité de sortie en fonction de l'intensité d'entrée qui conduit à un spectre gaussien de largeur diminuée par racine de trois.

Dans l'exemple représenté sur les figures 2a, 2b, 2c, les courbes Ca, Cb, Cc, représentent l'amplitude |E(ω)| de forme gaussienne, en fonction du coefficient aₙ, pour des valeurs de n, respectivement n = 2, 3 et 4.

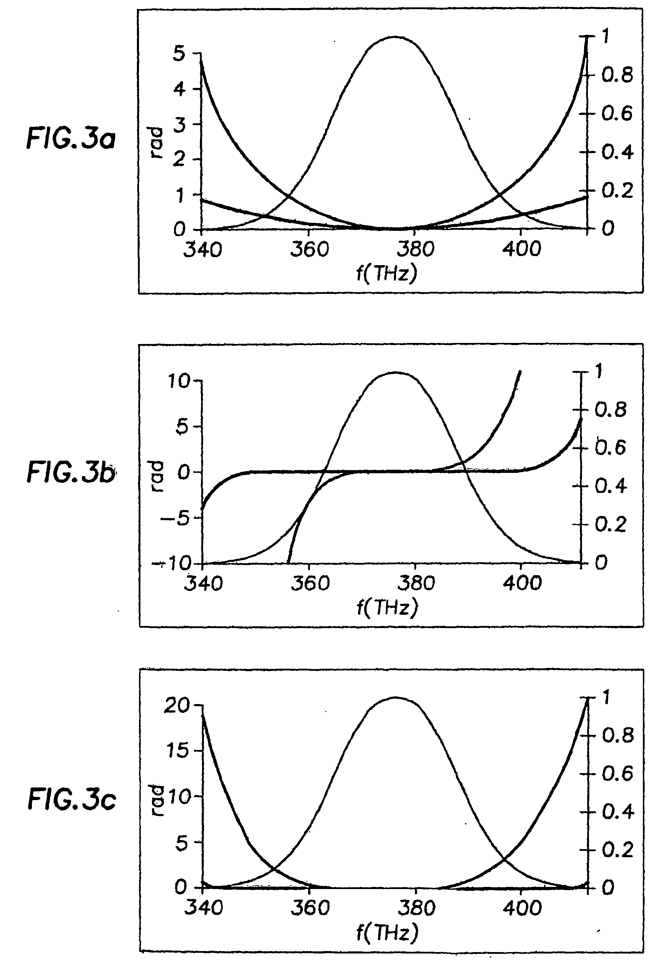

Pour travailler dans les conditions de mélange de fréquence favorables selon l'invention, il est indiqué de choisir des conditions conduisant à un facteur d'élargissement supérieur à 1. Les courbes des figures 3a, 3b, 3c, montrent la phase initiale ϕ (ω), à savoir C1a, C1b, C1c, et la phase après interaction non linéaire ϕ₃(ω), à savoir C2a, C2b, C2c, pour des valeurs de n, respectivement n = 2, 3 et 4, aₙ étant dans chaque cas choisi pour que le facteur d'élargissement soit 1,05 ; on voit que même dans ce cas d'élargissement marginal, les variations de phase après interaction non-linéaire sont significativement réduites par rapport à la phase initiale. La forme gaussienne du spectre d'amplitude, à savoir les courbes C0a, C0b, C0c, est également montrée à titre de référence sur les graphiques des figures 3a, 3b et 3c.

### Algorithme d'extraction de la phase

Une fois obtenu la mesure du spectre, la mesure de la différence de phase spectrale entre l'impulsion signal à mesurer et l'impulsion de référence secondaire se fait très simplement par une technique telle que décrite dans le document (DJ) et initialement proposée dans le document : Froehly C., Lacourt A., Vienot J.C. : « Notions de réponse impulsionnelle et de fonction de transfert temporelles des pupilles optiques, justifications expérimentales et applications », J. Opt. (Paris) 4 (1973) 183. D'autres méthodes d'extraction de la phase pourront être employées sans que cela change le principe de l'invention.

Si les variations de phase spectrale de l'impulsion de sortie du matériau non linéaire peuvent être négligées, la différence de phase spectrale donne directement, en négligeant les variations de phase dans le dispositif DMNL et d'éventuels dispositifs accessoires, la somme de la phase du signal et de la phase introduite par le séparateur. Cette dernière phase peut être dans certain cas être négligeable. Dans le cas contraire, l'homme de l'art saura en tenir compte soit par une mesure indépendante de cette phase, soit en la compensant par l'adjonction d'un dispositif identique en phase au séparateur, entre le dispositif DMNL et le dispositif de recombinaison R, de manière à ce que la mesure fournisse directement la phase du signal seul.

Si les variations de phase de l'impulsion de référence secondaire ne sont pas suffisamment faibles pour être négligées, la différence de phase mesurée peut être utilisée comme phase provisionnelle dans un calcul de la phase simulée de l'impulsion de référence par la méthode décrite ci-dessus. On obtient une nouvelle phase provisionnelle en ajoutant cette phase simulée à la différence de phase mesurée. L'itération de cette procédure conduit à la mesure de phase.

Cette technique d'itération par calcul peut être remplacée et/ou complétée par une itération physique ; à ce titre, l'exemple décrit ci-après peut être utilisé.

Dans l'exemple représenté sur la 4, qui diffère du montage de la figure 1, l'insertion d'un dispositif de façonnage DMFT modifie la forme temporelle sur la voie de référence entre le séparateur S et le dispositif d'interaction non linéaire DMNL. Partant d'une situation où, par exemple, le façonneur introduit un changement de phase nul, La différence de phase mesurée par (ISS) peut être introduite dans le façonneur d'impulsion pour obtenir une phase de l'impulsion de référence primaire ayant des variations de phase réduites par rapport à la phase d'origine. Il en résulte une impulsion de référence secondaire de phase plus proche d'une constante. Une nouvelle mesure d'(ISS) donne alors une meilleure approximation de la phase de l'impulsion à mesurer et l'opération peut être itérée jusqu'à obtenir la précision souhaitée.

Les techniques d'itération par calcul et physique peuvent être combinées pour atteindre une stratégie de mesure optimale du point de vue du nombre de mesures et de la précision à atteindre. La meilleure stratégie dépendra de la phase à mesurer. Si celle-ci est relativement proche d'une phase constante, l'itération par calcul peut suffire. Dans le contraire, le dispositif façonneur est nécessaire. En effet, comme il a été discuté plus haut, le principe de l'invention repose sur la réduction des variations de phase par la multiplicité des contributions fréquentielles au signal non-linéaire, ceci étant réalisé en particulier lorsque les conditions conduisent à un élargissement du spectre. Si les variations de phase sont importantes, le spectre n'est pas élargi mais rétréci comme il apparaît sur les figures 2a, 2b, 2c. Dans ces conditions, le façonneur d'impulsion apporte le moyen de générer une impulsion de référence initiale dont les variations de phase spectrale sont suffisamment faibles pour satisfaire les conditions nécessaires à la méthode proposée. La détermination des conditions approximatives adéquates pour la programmation du façonneur pourra être réalisée par diverses techniques telles que :
- des mesures de largeur spectrale pour diverses programmations pour localiser les conditions conduisant à spectre élargi ;
- une caractérisation approximative de la phase par des moyens externes et une des méthodes de l'état de l'art ;
- l'utilisation des moyens de l'invention pour réaliser une des méthodes de l'état de l'art ; il faut en effet noter que la combinaison d'un façonneur d'impulsion, d'un dispositif à matériau non linéaire et d'un détecteur constitue le fondement du brevet Français 02 05872 déjà cité, qui décrit des procédés de mesure de la phase autoréférencés.

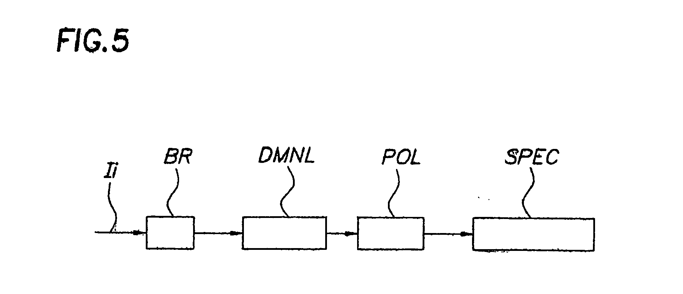

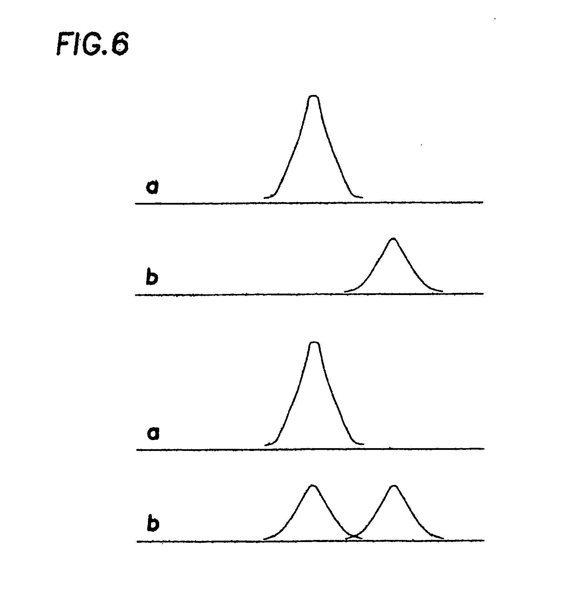

Dans l'exemple représenté sur la figure 5, une troisième version est indiquée selon une configuration dite en ligne. Elle comporte un seul chemin optique, les impulsions signal et référence étant distinguées par leur polarisation. Le signal à mesurer Ii est d'abord incident sur une lame biréfringente BR qui décompose l'impulsion en deux impulsions de polarisation croisées sur des axes s et r. Pour une polarisation incidente linéaire, l'angle alpha d'orientation de la lame biréfringente détermine l'amplitude relative de ces deux composantes. Le temps de propagation de ces deux impulsions et la différence de ces deux temps constitue le délai nécessaire à l'interférométrie spectrale. Les deux impulsions sont incidentes sur le dispositif à matériau non linéaire DMNL ayant les caractéristiques discutées précédemment. On extrait en sortie de DMNL, avec un dispositif polariseur POL, l'impulsion polarisée selon l'axe s, qui comprend outre la composante s du matériau biréfringent, une composante obtenue par rotation non-linéaire de polarisation à partir de la composante r. Comme précédemment, un spectromètre SPEC permet de mesurer l'interférométrie spectrale. Le rapport des deux composantes peut être réglé soit en opérant une rotation de l'ensemble BR/DMNL/POL autour de l'axe de propagation, soit en utilisant, à l'entrée du dispositif de mesure, un composant de rotation de polarisation (lame demi-onde). Pour faciliter la compréhension de la configuration décrite, le schéma de la figure 6 montre les signaux en fonction du temps et pour les deux polarisations :
a) en sortie de la lame biréfringente
b) en sortie du dispositif DMNL (ou de manière équivalente à l'entrée du spectromètre SPEC).

### Généralisation de l'invention

L'effet non linéaire du troisième ordre produisant une polarisation croisée (rotation de polarisation colinéaire) n'est pas le seul utilisable dans l'invention. On peut par exemple en créant deux répliques du signal se propageant à des angles différents, obtenir par effet non linéaire une rotation de la polarisation de la première induite par la seconde. D'autre part, la combinaison de deux étages d'effets du second ordre est connue dans l'état de l'art comme produisant un effet similaire aux effets non linéaire du troisième ordre directs : le premier étage produit par effet non linéaire de sommation un signal autour d'une fréquence double de la fréquence centrale, le deuxième étage mélangeant ce signal avec le signal incident pour obtenir par différence un signal autour de la fréquence centrale d'origine.

D'autres configurations sensibles aux effets non linéaires du troisième ordre sont décrites dans la littérature et peuvent être utilisables pour la présente invention. Il s'agit par exemple de la diffraction auto-induite, par laquelle l'interférence spatiale produite par la combinaison de deux répliques de l'impulsion à mesurer se propageant sur des angles différents produit par effet non linéaire une variation d'indice qui dévie l'impulsion incidente. L'impulsion de référence est alors produite sur une direction différente et peut être isolée par filtrage spatial. Un effet proche dans le principe est celui du réseau transitoire auto-induit, qui peut diffracter une troisième réplique de l'impulsion à mesurer.

D'autres effets non linéaires pourront être envisagés, dans la mesure où ils peuvent produire une impulsion de référence secondaire dont le spectre recouvre celui de l'impulsion signal.

### Réalisation de mesures spatio-temporelles

Dans la réalisation de l'invention ci-dessus, les faisceaux d'entrée du dispositif de recombinaison R ont une orientation telle qu'ils se recombinent colinéairement. Un changement d'angle relatif entre ces deux faisceaux permet d'obtenir une configuration d'interférométrie spatiale, telle que décrite dans le document (Born & Wolf, Principle of Optics Pergamon Press 1980). Considérant par exemple la mesure par un spectromètre à réseau ayant une fente d'entrée selon la direction x, et un détecteur bidimensionnel, un désalignement des faisceaux selon la direction x permet une mesure spatio/temporelle à une dimension spatiale, l'information spatiale état contenu dans la variation de phase des oscillations selon la direction x et l'information temporelle selon la direction perpendiculaire y.

Alternativement, des dispositifs supplémentaires de séparation de faisceaux et de recombinaison suivant des angles différents peuvent être ajoutés au montage pour obtenir par interférométrie une information de phase spatiale bidimensionnelle, selon des configurations qui peuvent être aisément être conçues par l'homme de l'art.

L'invention peut être utilisée à fin d'optimisation des caractéristiques de sortie de systèmes lasers. Le laser comprend alors un ou plusieurs dispositifs de mise en forme dont les caractéristiques seront modifiées dans une boucle de rétroaction pour obtenir les caractéristiques recherchées par l'utilisateur. Dans de nombreux cas, la caractéristique recherchée est l'annulation des variations de phase spectrale.

Dans le cas général, une utilisation particulièrement intéressante apparaît dans les configurations où un dispositif de mise en forme DMFT est mis en oeuvre. On peut envisager d'utiliser ce dispositif de mise en forme, non seulement dans sa fonction de mesure de l'invention, mais également pour l'obtention d'une caractéristique d'impulsion recherchée.

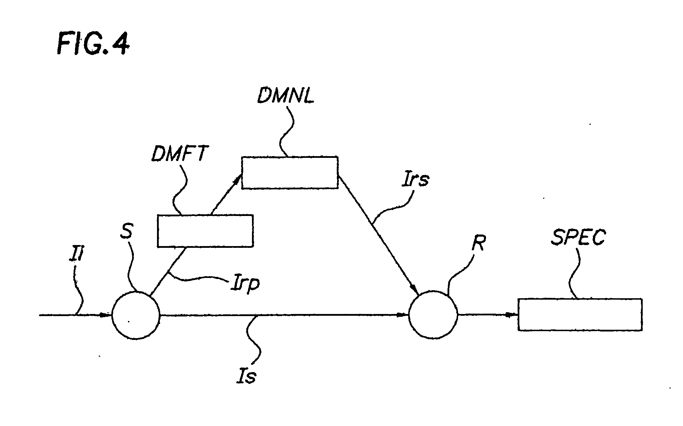

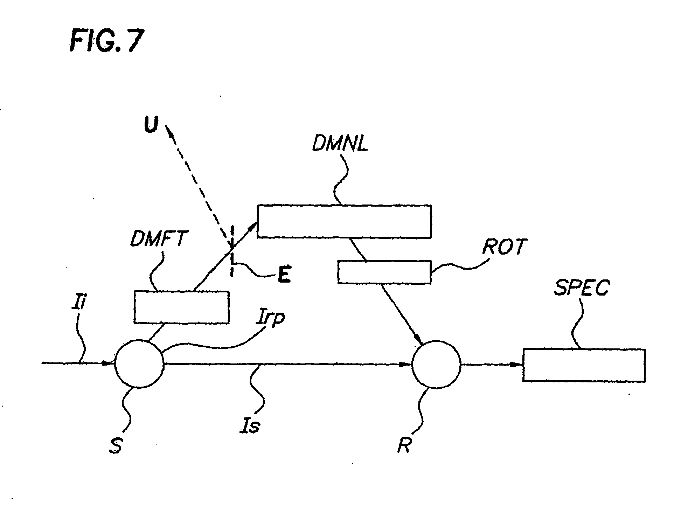

Dans l'exemple représenté sur la figure 7, le dispositif selon la figure 4, dans lequel l'effet non linéaire utilisé est l'effet de rotation de polarisation (XPW), est modifié par l'adjonction d'un extracteur d'impulsion E amovible entre le dispositif de façonnage DMFT et le dispositif d'interaction non linéaire DMNL. Cet extracteur peut être, par exemple, un miroir amovible, comme représenté sur la figure 7. Par ailleurs, un dispositif de rotation de polarisation ROT est inséré entre le dispositif d'interaction non linéaire DMNL et le dispositif de recombinaison R. En l'absence de l'extracteur d'impulsion E, et lorsque le dispositif de rotation de polarisation ROT est réglé pour ne pas produire de rotation de polarisation, la configuration est essentiellement identique à celle représentée sur la figure 4, et permet la mesure de la phase spectrale de l'impulsion d'entrée Ii. Si le dispositif de rotation de polarisation ROT est réglé pour une rotation de polarisation de 90 degrés, le montage réalise une interférométrie spectrale de Is avec l'onde transmise linéairement par le dispositif d'interaction non linéaire DMNL. En négligeant ou en calculant les variations de phase induites par cette transmission linéaire, on déduit de l'interférométrie spectrale une mesure de la phase introduite par le dispositif de mise en forme DMFT. Lorsque l'extracteur d'impulsion E est mis en place, le signal U extrait a une phase connue car elle est la somme de la phase incidente et de celle du dispositif de façonnage DMFT, mesurées respectivement par la mesure sans rotation et avec rotation de polarisation. Diverses réalisations de ce principe pourront être envisagées, comme par exemple, la réalisation de la fonction d'extraction par la combinaison d'un rotateur de polarisation et d'un réflecteur sensible à la polarisation. Comme dans les exemples précédents, les phases des divers dispositifs additionnels devront être négligeables ou mesurables, ou compensables par des dispositifs ajoutés sur l'autre voie d'interférométrie.

## Revendications

1. Procédé de mesure de la phase spectrale ou de phases spectrale et spatiale combinées, d'une impulsion lumineuse ultra brève (Ii),
**caractérisé en ce qu'**il comprend :
- une première étape permettant une décomposition (S) de ladite impulsion lumineuse ultra brève (Ii) en deux impulsions, dénommées respectivement impulsion signal (Is) et impulsion de référence primaire (Irp), de polarisation ou de direction de propagation différentes et dont les caractéristiques de phase sont essentiellement identiques à ladite impulsion lumineuse ultra brève (Ii),
- une deuxième étape permettant une interaction de ladite impulsion de référence primaire (Irp) avec un matériau optique non linéaire (DMNL), ladite interaction générant, par un mécanisme optique non linéaire d'ordre n impair supérieur ou égal à 3, une impulsion de référence secondaire (Irs) de fréquence moyenne essentiellement identique à celle de l'impulsion de référence primaire (Irp), d'intensité proportionnelle à l'intensité de ladite impulsion de référence primaire (Irp) portée à la puissance n, dans des conditions où la largeur spectrale de ladite impulsion de référence secondaire (Irs) est supérieure à la largeur spectrale de ladite impulsion de référence primaire (Irp),
- une troisième étape permettant une mesure d'interférométrie (SPEC) spectrale et/ou spatiale par recombinaison (R) de ladite impulsion de référence secondaire (Irs) et de ladite impulsion signal (Is), avec un décalage temporel donné ou nul et un décalage angulaire donné ou nul.

2. Procédé selon la revendication 1,
**caractérisé en ce que** le susdit mécanisme optique non linéaire d'ordre n est un mécanisme de rotation de polarisation colinéaire.

3. Procédé selon la revendication 1,
**caractérisé en ce que** la susdite première étape permettant la décomposition (S) de ladite impulsion lumineuse ultra brève (Ii) en deux impulsions (Is, Irp), comprend l'interaction avec un matériau biréfringent, la susdite impulsion signal (Is) et la susdite impulsion de référence primaire (Irp) sont colinéaires, de polarisations perpendiculaires et décalées temporellement.

4. Procédé selon la revendication 1,
**caractérisé en ce que** la susdite première étape permettant la décomposition (S) de ladite impulsion lumineuse ultra brève (Ii) en deux impulsions (Is, Irp), est suivie d'une étape supplémentaire de mise en forme temporelle (DMFT) de la susdite impulsion de référence primaire (Irp) de manière à réduire la durée de ladite impulsion de référence primaire (Irp).

5. Procédé selon les revendications 1 et 4,
**caractérisé en ce que** la susdite étape supplémentaire de mise en forme temporelle (DMFT) de la susdite impulsion de référence primaire (Irp) permet de satisfaire aux susdites conditions où la largeur spectrale de ladite impulsion de référence secondaire (Irs) est supérieure à la largeur spectrale de ladite impulsion de référence primaire (Irs).

6. Procédé selon la revendication 1,
**caractérisé en ce qu'**il comprend en outre l'extraction de l'impulsion lumineuse ultra-brève et la caractérisation de cette impulsion grâce au résultat de la mesure de façon à obtenir une impulsion extraite de forme programmable et mesurée.

7. Dispositif pour la mise en oeuvre du procédé selon la revendication 1 destiné à la mesure de la phase spectrale ou de phases spectrale et spatiale combinées d'une impulsion lumineuse ultra brève (Ii),
**caractérisé en ce qu'**il comprend :
- un premier dispositif permettant une décomposition (S) de ladite impulsion lumineuse ultra brève (Ii) en deux impulsions, dénommées respectivement impulsion signal (Is) et impulsion de référence primaire (Irp), de polarisation ou de direction de propagation différentes et dont les caractéristiques de phase sont essentiellement identiques à ladite impulsion lumineuse ultra brève,
- un deuxième dispositif permettant une interaction de ladite impulsion de référence primaire (Irp) avec un matériau optique non linéaire (DMNL), ladite interaction générant, par un mécanisme optique non linéaire d'ordre n impair supérieur ou égal à 3, une impulsion de référence secondaire (Irs) de fréquence moyenne essentiellement identique à celle de l'impulsion de référence primaire (Irp), d'intensité proportionnelle à l'intensité de ladite impulsion de référence primaire (Irp) portée à la puissance n, dans des conditions où la largeur spectrale de ladite impulsion de référence secondaire (Irs) est supérieure à la largeur spectrale de ladite impulsion de référence primaire (Irp),
- un ou plusieurs dispositifs de mesure d'interférométrie (SPEC) spectrale et/ou spatiale par recombinaison de ladite impulsion de référence secondaire (Irs) et de ladite impulsion signal (Is), avec un décalage temporel donné ou nul et un décalage angulaire donné ou nul.

8. Dispositif selon la revendication 7,
**caractérisé en ce que** le susdit mécanisme optique non linéaire d'ordre n est un mécanisme de rotation de polarisation non colinéaire.

9. Dispositif selon la revendication 7,
**caractérisé en ce que** le susdit mécanisme optique non linéaire d'ordre n est un mécanisme de diffraction auto-induite.

10. Dispositif selon la revendication 7,
**caractérisé en ce que** le susdit mécanisme optique non linéaire d'ordre n est un mécanisme de réseau transitoire auto-induit.

11. Dispositif selon la revendication 7,
**caractérisé en ce que** le susdit un ou les susdits plusieurs dispositifs de mesure d'interférométrie (SPEC) spectrale et/ou spatiale par recombinaison de ladite impulsion de référence secondaire (Irs) et de ladite impulsion signal (Is) permettent simultanément une mesure de la phase spectrale relative et de la phase spatiale relative selon une dimension.

12. Dispositif selon la revendication 11,
**caractérisé en ce que** la susdite recombinaison de ladite impulsion de référence secondaire (Irs) et de ladite impulsion signal (Is) est séparée en deux voies :
- une voie permettant la mesure spatio-temporelle,
- une voie permettant la mesure spatiale dans les deux dimensions.

13. Dispositif selon la revendication 7,
**caractérisé en ce qu'**un dispositif de façonnage d'impulsion (DMFT) spatio-temporel et/ou un dispositif de façonnage d'impulsion spatial, agissant sur le susdit signal de référence primaire (Irp) sont situés entre le susdit premier dispositif permettant une décomposition (S) de ladite impulsion lumineuse ultra brève (Ii) en deux impulsions (Is, Irp), et le susdit deuxième dispositif permettant une interaction de ladite impulsion de référence primaire (Irp) avec un matériau optique non linéaire (DMNL), de manière à obtenir une impulsion de référence secondaire (Irs) de durée minimale.

14. Dispositif selon les revendications 7 et 13,
**caractérisé en ce qu'**un dispositif de rotation de polarisation (ROT) agissant sur le susdit signal de référence secondaire (Irs) est situé entre le susdit deuxième dispositif permettant une interaction de ladite impulsion de référence primaire (Irp) avec un matériau optique non linéaire (DMNL) et le susdit dispositif de recombinaison (R) de manière à permettre deux mesures d'interférométrie caractérisant complètement une impulsion programmable (U) pouvant être extraite par un dispositif d'extraction (E).

## Claims

1. Method for measuring the spectral phase or combined spectral and spatial phases of an ultra short light pulse (Ii),
**characterized in that** it comprises:
- a first step allowing a decomposition (S) of said ultra short light pulse (Ii) into two pulses, respectively called signal pulse (Is) and primary reference pulse (Irp), of different polarization or propagation direction and whereof the phase characteristics are essentially identical to said ultra short light pulse (Ii),
- a second step allowing an interaction of said primary reference pulse (Irp) with a nonlinear optical material (DMNL), said interaction generating, through a nonlinear optical mechanism of odd order n greater than or equal to 3, a secondary reference pulse (Irs) of average frequency essentially identical to that of the primary reference pulse (Irp), of intensity proportional to the intensity of said primary reference pulse (Irp) carried to the power n, under conditions where the spectral width of said secondary reference pulse (Irs) is greater than the spectral width of said primary reference pulse (Irp),
- a third step allowing a spectral and/or spatial interferometry measurement (SPEC) by recombination (R) of said secondary reference pulse (Irs) and said signal pulse (Is), with a given or null temporal offset and a given or null angular offset.

2. Method according to claim 1,
**characterized in that** said nonlinear optical mechanism of order n is a collinear polarization rotation mechanism.

3. Method according to claim 1,
**characterized in that** said first step allowing the decomposition (S) of said ultra short light pulse (Ii) into two pulses (Is, Irp), comprises the interaction with a birefringent material, said signal pulse (Is) and said primary reference pulse (Irp) are collinear, of perpendicular and temporally offset polarizations.

4. Method according to claim 1,
**characterized in that** said first step allowing the decomposition (S) of said ultra short light pulse (Ii) into two pulses (Is, Irp) is followed by an additional step for temporal forming (DMFT) of said primary reference pulse (Irp) so as to reduce the duration of said primary reference pulse (Irp).

5. Method according to claims 1 and 4,
**characterized in that** said additional temporal forming step (DEFT) of said primary reference pulse (Irp) makes it possible to satisfy said conditions where the spectral width of said secondary reference pulse (Irs) is greater than the spectral width of said primary reference pulse (Irs).

6. Method according to claim 1,
**characterized in that** it comprises a further step of extracting said ultrashort light pulse and a step of a characterizing said pulse so as to obtain an extracted pulse having a programmable and measured form.

7. Device for the implementation of the method according to claim 1 intended to measure the spectral phase or combined spectral and spatial phases of an ultra short light pulse (Ii),
**characterized in that** it comprises:
- a first device allowing a decomposition (S) of said ultra short light pulse (Ii) into two pulses, respectively called signal pulse (Is) and primary reference pulse (Irp), of difference polarization or propagation direction and whereof the phase characteristics are essentially identical to said ultra short light pulse,
- a second device allowing an interaction of said primary reference pulse (Irp) with a nonlinear optical material (DMNL), said interaction generating, through a nonlinear optical mechanism of odd order n greater than or equal to 3, a secondary reference pulse (Irs) of average frequency essentially identical to that of the primary reference pulse (Irp), of intensity proportional to the intensity of said primary reference pulse (Irp) carried to the n power, under conditions where the spectral width of said secondary reference pulse (Irs) is greater than the spectral width of said primary reference pulse (Irp),
- one or several spectral and/or spatial interferometry measurement devices (SPEC) through recombination of said secondary reference pulse (Irs) and said signal pulse (Is), with a given or null temporal offset and a given or null angular offset.

8. Device according to claim 7,
**characterized in that** said nonlinear optical device of order n is a non-collinear polarization rotation mechanism.

9. Device according to claim 7,
**characterized in that** said nonlinear optical device of order n is a self-induced diffraction mechanism.

10. Device according to claim 7,
**characterized in that** said nonlinear optical device of order n is a self-induced transitory network mechanism.

11. Device according to claim 7,
**characterized in that** said one or several spectral and/or spatial interferometry measurement devices (SPEC) through recombination of said secondary reference pulse (Irs) and said signal pulse (Is) simultaneously allow a measurement of the relative spectral phase and the relative spatial phase according to one dimension.

12. Device according to claim 11,
**characterized in that** said recombination of said secondary reference pulse (Irs) and said signal pulse (Is) is separated into two paths:
- one path allowing spatial-temporal measurement,
- one path allowing spatial measurement in the two dimensions.

13. Device according to claim 7,
**characterized in that** a spatial-temporal pulse generator device and/or a spatial pulse generator device (DMFT), acting on said primary reference signal (Irp), are located between said first device allowing decomposition (S) of said ultra short light pulse (Ii) into two pulses (Is, Irp), and said second device allowing interaction of said primary reference pulse (Irp) with a nonlinear optical material (DMNL), so as to obtain a secondary reference pulse (Irs) of minimal duration.

14. Device according to claims 7 and 13,
**characterized in that** a polarization rotation device (ROT) acting on said secondary reference signal (Irs) is located between said second device allowing an interaction of said primary reference pulse (Irp) with a nonlinear optical material (DMNL) and said recombination device (R) so as to allow two interferometry measurements completely characterizing a programmable pulse (U) able to be extracted by an extraction device (E).

## Patentansprüche

1. Verfahren zum Messen der spektralen Phase oder von kombinierter spektraler und räumlicher Phase eines ultrakurzen Lichtimpulses (Ii),
**dadurch gekennzeichnet, dass** es folgendes umfasst:
- einen ersten Schritt, der einen Zerfall (S) des ultrakurzen Lichtimpulses (Ii) in zwei verschiedene Impulse von Polarisation oder von Ausbreitungsrichtung, die als Impulssignal (Is) bzw. erster Referenzimpuls (Irp) bezeichnet werden und deren Phasenmerkmale im Wesentlichen mit dem ultrakurzen Lichtimpuls (Ii) identisch sind, ermöglicht,
- einen zweiten Schritt, der eine Wechselwirkung des ersten Referenzimpulses (Irp) mit einem nicht linearen optischen Material (DMNL) ermöglicht, wobei die Wechselwirkung durch einen nicht linearen optischen Mechanismus ungerader Ordnung n von größer oder gleich 3 einen zweiten Referenzimpuls (Irs) von mittlerer Frequenz, die im Wesentlichen mit derjenigen des ersten Referenzimpulses (Irp) identisch ist, einer Intensität, die zu der Intensität des ersten auf die Leistung n heraufgesetzten Referenzimpulses (Irp) identisch ist, unter Bedingungen erzeugt, wobei die Spektralbreite des zweiten Referenzimpulses (Irs) größer ist als die Spektralbreite des ersten Referenzimpulses (Irp);
- einen dritten Schritt, der eine spektrale und/oder räumliche Interferometrie-Messsung (SPEC) durch Rekombination (R) des zweiten Referenzimpulses (Irs) und des Impulssignals (Is) mit einer oder keiner gegebenen zeitlichen Verschiebung und einer oder keiner gegebenen Winkelverschiebung erlaubt.

2. Verfahren nach Anspruch 1,
**dadurch gekennzeichnet, dass** der oben genannte nicht lineare optische Mechanismus der Ordnung n ein kolinearer Rotationspolarisationsmechanismus ist.

3. Verfahren nach Anspruch 1,
**dadurch** gekennzeichet, dass der oben genannte erste Schritt, der den Zerfall (S) des ultrakurzen Lichtimpulses (Ii) in zwei Impulse (Is, Irp) erlaubt, die Wechselwirkung mit einem doppelbrechenden Material umfasst, das oben genannte Impulssignal (Is) und der oben genannte erste Referenzimpuls (Irp) kolinear, von senkrechter Polarisation und zeitlich versetzt sind,

4. Verfahren nach Anspruch 1,
**dadurch gekennzeichnet, dass** auf den oben genannten ersten Schritt, der den Zerfall (S) des ultrakurzen Lichtimpulses (Ii) in zwei Impulse (Is, Irp) erlaubt, ein zusätzlicher Schritt der zeitlichen Formung (DMFT) des oben genannten ersten Referenzimpulses (Irp) folgt, derart, dass die Dauer des ersten Referenzimpulses (Irp) vermindert ist.

5. Verfahren nach den Ansprüchen 1 und 4,
**dadurch gekennzeichnet, dass** der oben genannte zusätzliche Schritt der zeitlichen Formung (DMFT) des oben genannten ersten Refenzimpulses (Irp) die Erfüllung der oben genannten Bedingungen, wobei die Spektralbreite des zweiten Refenzimpulses (Irs) größer ist als die Spektralbreite des ersten Referenzimpulses (Irs), erlaubt.

6. Verfahren nach Anspruch 1,
**dadurch** gekenntzeichnet, dass es weiterhin die Extraktion des ultrakurzen Lichtimpulses und die Charakterisierung dieses Impulses auf Grund des Ergebnisses der Messung umfasst, derart, dass ein extrahierter Impuls von programmierbarer und gemessener Form erhalten wird.

7. Vorrichtung zur Durchführung des Verfahrens nach Anspruch 1,
die zum Messen der spektralen Phase oder von kombinierter spektraler und räumlicher Phase eines ultrakurzen Lichtimpulses (Ii) bestimmt ist,
**dadurch gekennzeichnet, dass** sie folgendes umfasst:
- eine erste Vorrichtung, die einen Zerfall (S) des ultrakurzen Lichtimpulses (Ii) in zwei verschiedene Impulse von Polarisation oder von Ausbreitungsrichtung, die Impulssignal (Is) bzw. primärer Referenzimpuls (Irp) genannt werden und deren Phasenmerkmale im Wesentlichen mit dem ultrakurzen Lichtimpuls (Ii) identisch sind, ermöglicht,
- eine zweite Vorrichtung, die eine Wechselwirkung des ersten Referenzimpulses (Irp) mit einem nicht linearen optischen Material (DMNL) ermöglicht, wobei die Wechselwirkung durch einen nicht linearen optischen Mechanismus ungerader Ordnung n von größer oder gleich 3 einen zweiten Referenzimpuls (Irs) von mittlerer Frequenz, die im Wesentlichen mit derjenigen des ersten Referenzimpulses (Irp) identisch ist, einer Intensität, die zu der Intensität des ersten auf die Leistung n heraufgesetzten Referenzimpulses (Irp) identisch ist, unter Bedingungen erzeugt, wobei die Spektralbreite des zweiten Referenzimpulses (Irs) größer ist als die Spektralbreite des ersten Referenzimpulses (Irp);
- eine oder mehrere Vorrichtungen zum Messen von spektraler und/oder räumlicher Interferometrie (SPEC) durch Rekombination (R) des zweiten Referenzimpulses (Irs) und des Impulssignals (Is) mit einer oder keiner gegebenen zeitlichen Verschiebung und einer oder keiner gegebenen Winkelverschiebung.

8. Vorrichtung nach Anspruch 7,
**dadurch gekennzeichnet, dass** der oben genannte nicht lineare optische Mechanismus der Ordnung n ein nicht kolinearer Rotationspolarisationsmechanismus ist.

9. Vorrichtung nach Anspruch 7,
**dadurch gekennzeichnet, dass** der oben genannte nicht lineare optische Mechanismus der Ordnung n ein selbstinduzierter Diffraktionsmechanismus ist.

10. Vorrichtung nach Anspruch 7,
**dadurch gekennzeichnet, dass** der oben genannte nicht lineare optische Mechanismus der Ordnung n ein selbstinduzierter transitorischer Netzwerkmechanismus ist.

11. Vorrichtung nach Anspruch 7,
**dadurch gekennzeichnet, dass** der oben genannte oder die oben genannten mehreren spektralen und/oder räumlichen Interferometrie-Meßvorrichtungen (SPEC) durch Rekombination des zweiten Referenzimpulses (Irs) und des Impulssignals (Is) gleichzeitig eine Messung der relativen spektralen Phase und der relativen räumlichen Phase in einer Dimension erlauben.

12. Vorrichtung nach Anspruch 11,
**dadurch gekennzeichnet, dass** die oben genannte Rekombination des zweiten Referenzimpulses (Irs) und des Impulssignals (Is) in zwei Wege aufgetrennt ist:
einen Weg, der die räumlich-zeitliche Messung erlaubt,
- einen Weg, der die räumliche Messung in den beiden Dimensionen erlaubt.

13. Vorrichtung nach Anspruch 7,
**dadurch gekennzeichnet, dass** eine Vorrichtung zur räumlich-zeitlichen Impulsformung (DMFT) und/oder eine Vorrichtung zur räumlichen Impulsformung, die auf das oben genannte primäre Referenzsignal (Irp) wirken, zwischen der oben genannten ersten Vorrichtung, die einen Zerfall (S) des ultrakurzen Lichtimpulses (Ii) in zwei Impulse (Is, Irp)) erlaubt, und der oben genannten zweiten Vorrichtung, die eine Wechselwirkung des ersten Referenzimpulses (Irp) mit einem optischen nicht linearen Material (DMNL) erlaubt, angeordnet sind, derart, dass ein zweiter Referenzimpuls (Irs) von möglichst kurzer Dauer erhalten wird.

14. Vorrichtung nach den Ansprüchen 7 und 13,
**dadurch gekennzeichnet, dass** eine Rotationspolarisationsvorrichtung (ROT), die auf das oben genannte zweite Referenzsignal (Irp) wirkt, zwischen der oben genannten zweiten Vorrichtung, die eine Wechselwirkung des ersten Referenzimpulses (Irs) mit einem optischen nicht linearen Material (DMNL) erlaubt, und der oben genannten Rekombinationsvorrichtung (R) angeordnet ist, derart, dass zwei Interferometrie-Messungen möglich sind, die einen programmierbaren Impuls (U), der durch eine Extraktionsvomichtung (E) extrahiert werden kann, vollständig charakterisieren,
